# EUROPEAN PATENT SPECIFICATION

(11) **EP 0 553 414 B1**
(45) Date of publication and mention of the grant of the patent: **28.02.1996**
(21) Application number: 92119243.1
(22) Date of filing: 11.11.1992
(51) Int. Cl.: B29C 63/30, E04C 2/54

(54) **Panel-shaped element manufactured from a synthetic resin**
Plattenförmiges Element aus Kunstharz
Elément en forme de panneau en résine synthétique

(30) Priority: 30.01.1992 NL 9200163
(43) Date of publication of application: 04.08.1993
(73) Proprietor: GENERAL ELECTRIC COMPANY, Schenectady, NY 12345 (US)
(72) Inventor: Koper, Roland, NL-4600 AC Bergen op Zoom (NL)
(74) Representative: Grever, Frederik

(56) References cited:
- AT-B- 358 232
- DE-A- 2 643 602
- DE-A- 3 434 413
- DE-A- 3 539 814
- FR-A- 2 660 790
- GB-A- 2 247 040
- POWER. vol. 114, no. 3, March 1970, NEW YORK US page 151 R.L. SERRANO 'What would you have done?'

## Description

The invention relates to a panel-shaped element manufactured from a synthetic resin and comprising at least two sheets extending substantially parallel to each other, said sheets being bonded together by means of ridges which extend transversely to the sheets, are formed integrally with the sheets and bound channels situated between the sheets.

Such panel-shaped elements (see e.g. AT-B-358 232) are generally extruded from synthetic resin such as polycarbonate. In many applications such translucent and transparent panel-shaped sheets pass too much sunlight and thermal energy resulting from solar radiation. In order to mitigate this, the polycarbonate raw materials are sometimes coloured prior to or during the extrusion. The panel-shaped elements are sometimes extruded in different colour layers.

The optional provision of coatings meets with difficulties since the coatings used for this purpose usually comprise metal particles which influence the transparency of the panel-shaped element. Furthermore, such coatings usually are not lasting due to oxidation of metal particles.

Providing foils on the outside of the panel-shaped element presents problems in that the adhesive bonding of provided foils proves to be detrimentally influenced by occurring vapour pressure differences and therefore the foils work loose in the course of time.

It is the object of the invention to obtain panel-shaped elements of the above-mentioned type in which the transparency to solar beams (sun admission factor) can be reduced and/or the thermal reflectivity (insulation value) can be improved.

According to the invention this may be achieved in that at least one of the sheets, on its side facing the other sheet, in at least fifty percent of the channels bounded by the ridges, is covered by foils manufactured from sun-reflecting or heat-reflecting material provided in the channels in question.

AT 358 232 describes multi-wall sheet of the type described in the preamble of the first claim of this application. Some of the channels of AT 358 232 are provided with heat absorbing means. The heat absorbing means can be in the form of metal films, thin metal sheet or in the form of a body out of a transparent plastic material of glass material which absorb heat particularly well. The ridges of the panel should be shorter than the overall length of the panel to obtain natural air circulation within the panel, so that the energy absorbed can be used to get hot air circulation in the channels.

DE-A-3434413 describes panels with channels. In the channels are incorporated elements out of a light and heat absorbing phototropic salt.

When the construction according to the invention is used, coloured sunlight-reflecting or metallised translucent foils may be provided in the interior of the channels, as a result of which the passage of solar radiation may be tempered and/or thermal energy may be reflected with optimum maintenance of the transparency.

A particularly simple and efficacious method of manufacturing such panel-shaped elements is obtained if the foils are transported through the channels in question by means of pressurised air.

The use of pressurised air to introduce longitudinal objects like wires into long channels and ducts is generally known e.g. from Power, part 114, nr. 3, March 1970, New York, US, R.L. Serrano: "What would you have done?" In this method one end of the wire is attached to an object with a cross section which is much bigger than the cross section of the wire i.e. a ping pong ball. The ping pong ball is moved by means of the pressurized air.

FR-A-2 660 790 describes a cable provided with extended wings. The wings serve to enable the transport of the cable through a duct by means of pressurized air.

The invention will now be described in greater detail with reference to the accompanying figures, in which
Figure 1 is a diagrammatic plan view of a machine for introducing foils into the channels of a panel-shaped element.
Figure 2 is a sectional view of Figure 1 taken on the line A-A in Figure 1.
Figure 3 is a sectional view on an enlarged scale of a panel-shaped element taken on the line A-A in Figure 1.
Figure 4 is a sectional view on an enlarged scale of a part of a panel-shaped element taken on the line B-B in Figure 1.

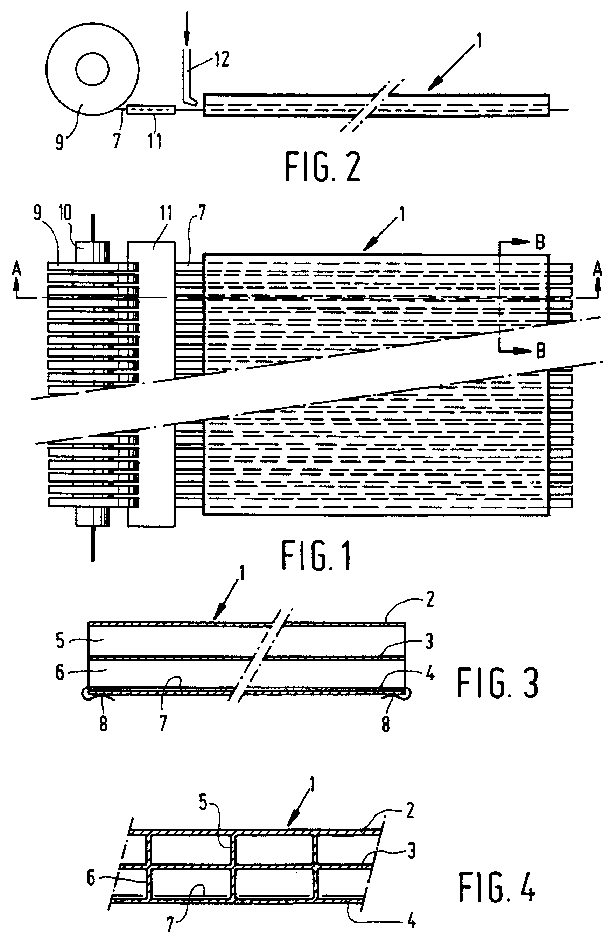

As will be apparent in particular from Figures 3 and 4, a panel-shaped element 1 comprises a few - in the embodiment shown three - sheets 2-4 which extend substantially parallel to each other and which are bonded together by ridges 5,6 which form one assembly with the said sheets 2,3,4, extend perpendicularly to and between the said sheets 2,3,4 and are provided at regular distances from each other. Such panel-shaped elements 1 are usually extruded from polycarbonate and may be used, for example, as parts of walls, roofs or the like.

As is further shown in Figures 3 and 4 foils 7 are provided in the channels bounded by the lower sheet 4 and extend in the longitudinal direction of the said channels, said foils 7 being situated on the side of the sheet 4 facing the sheet 3 situated oppositely to the sheet 4. As shown in Figure 3, the ends 8 of the foils 7 extending outside the panel-shaped element 1 are bent over and glued to the outer face of the panel-shaped element 1.

The foils 7 may be manufactured from sunlight-reflecting foils, for example, metallised translucent foils, so that with optimum maintenance of the transparency of the channel sheets the sun admission factor will be reduced and/or heat will be reflected. The foils 7 may optionally be coloured.

It is also possible to provide differently coloured foils 7 in the various channels with a view to giving the panel-shaped element an attractive aesthetic appearance.

For inserting the foils 7 a machine may be used as is shown diagrammatically in Figures 1 and 2. As is shown in these Figures, the foils 7 cut to the desired width are provided on separate reels 9 which can be rotated about a spindle 10. The foils unreeled from the reels are guided through slots provided in a guiding member 11 accommodated at the level of the reels 9.

The panel-shaped element into which the foils are to be inserted is provided with its one end near the guiding member 11 in such a manner that the free ends of the foils become located in the ends of the channels provided in the panel-shaped element. The foils may then be blown simultaneously through the channels by means of pressurised, preferably ionised, air, for which purpose such pressurised air is blown through the channels in the longitudinal direction of the said channels by means of nozzles 12 accommodated near the guiding member 11.

After the foils have been transported through the channels the supply of pressurised air is interrupted and the foils, as viewed in Figure 1, are cut near the left-hand end of the panel-shaped element, after which the ends 8 of the foils may be bent over and bonded at each end of the panel-shaped element. For the sake of showing the bent foils clearly the Figure 3 shows the foils as loosely bent; in practice the foils will be bent very tight against the outer side possibly while being under a small tension in longitudinal direction.

It will be obvious that the invention is not restricted to panels comprising three sheets but that it may also be used with panels having two or more than three sheets.

Furthermore, the foils 7 need not be provided on the inside of an outermost sheet, but they may also be provided on a sheet interposed between two other sheets. For panels with three sheets it is actually prefered to do so. A further possibility is to provide foils on a few sheets situated one on top of the other and/or on alternating sheets or sheets situated at different levels, so that, viewed in the longitudinal direction of the channels in juxtaposed groups of superimposed channels the foils are situated at different levels, as a result of which in particular the appearance of the sheet can be influenced.

## Claims

1. A panel-shaped element (1) manufactured from a synthetic resin and comprising at least two sheets (2,3,4) extending at least substantially parallel to each other, said sheets (2,3,4) being bonded together by means of ridges (5,6) which extend transversely to the sheets (2,3,4), form one assembly with the sheets (2,3,4) and are situated between the sheets (2,3,4), characterised in that at least one of the sheets (4), on its side facing the other sheet (2;3), in at least fifty percent of the channels bounded by the ridges (5,6), is covered by foils (7) manufactured from sun-reflecting or heat-reflecting material provided in the channels in question.

2. A panel-shaped element as claimed in Claim 1, characterised in that metallised foils (7) are provided.

3. A panel-shaped element as claimed in any of the preceding Claims, characterised in that transparent foils (7) are used.

4. A panel-shaped element as claimed in any of the preceding Claims, characterised in that coloured foils (7) are used.

5. A panel-shaped element as claimed in any of the preceding Claims, characterised in that differently coloured foils (7) are provided in various channels.

6. A panel-shaped element as claimed in any of the preceding claims having three or more sheets (2,3,4), characterised in that superimposed sheets are covered with foils (7).

7. A panel-shaped element as claimed in Claim 6, characterised in that the foils (7) are provided in juxtaposed groups of superimposed channels alternately on different ones of the superimposed sheets.

## Patentansprüche

1. Ein plattenförmiges Element (1), hergestellt aus einem synthetischen Harz und das wenigstens zwei Folien (2,3,4) umfaßt, die sich zumindest im wesentlichen zueinander parallel erstrecken, wobei besagte Folien (2,3,4 ) mittels vorstehender Stege (5,6) miteinander verbunden sind , die sich zu den Folien (2,3,4) querverlaufend erstrecken, mit den Folien (2, 3,4) eine Gesamtheit bilden und zwischen den Folien (2,3,4) gelegen sind, dadurch gekennzeichnet, daß wenigstens eine der Folien (4) auf ihrer Seite, die der anderen Folie (2;3) gegenüberliegt, in wenigstens fünfzig Prozent der durch die vorstehenden Stege (5,6) begrenzten Kanäle durch Folien (7) bedeckt ist, die aus Sonnenlicht reflektierendem oder Hitze reflektierendem Material hergestellt sind, das in den in Frage stehenden Kanälen vorgesehen ist.

2. Ein plattenförmiges Element, wie in Anspruch 1 geltend gemacht, dadurch gekennzeichnet, daß metallisierte Folien (7) vorgesehen sind.

3. Ein plattenförmiges Element, wie in jedem beliebigen der vorhergehenden Ansprüche geltend gemacht, dadurch gekennzeichnet, daß transparente Folien (7) verwendet werden.

4. Ein plattenförmiges Element, wie in jedem beliebigen der vorhergehenden Ansprüche geltend gemacht, dadurch gekennzeichnet, daß gefärbte Folien (7) verwendet werden.

5. Ein plattenförmiges Element, wie in jedem beliebigen der vorhergehenden Ansprüche geltend gemacht, dadurch gekennzeichnet, daß verschieden gefärbte Folien (7) in mehreren Kanälen vorgesehen sind.

6. Ein plattenförmiges Element, wie in jedem beliebigen der vorhergehenden Ansprüche geltend gemacht, das drei oder mehr Folien (2,3,4) besitzt, dadurch gekennzeichnet, daß übereinandergelegte Folien mit Folien(7) bedeckt sind.

7. Ein plattenförmiges Element, wie in Anspruch 6 geltend gemacht, dadurch gekennzeichnet, daß die Folien (7) in nebeneinander liegenden Gruppen von übereinander liegenden Kanälen abwechselnd auf verschiedenen der übereinander gelegten Folien vorgesehen sind.

## Revendications

1. Elément (1) en forme de panneau fabriqué à partir d'une résine synthétique et comprenant au moins deux feuilles (2, 3, 4) s'étendant au moins de façon sensiblement parallèle les unes aux autres, lesdites feuilles (2, 3, 4) étant assemblées au moyen de nervures (5, 6) qui s'étendent transversalement aux feuilles (2, 3 4), font corps avec les feuilles (2, 3, 4) et sont situées entre les feuilles (2, 3, 4), caractérisé en ce qu'au moins une des feuilles (4), sur son côté orienté vers l'autre feuille (2, 3), est recouverte, dans au moins cinquante pour cent des rainures délimitées par les nervures (5, 6), par des films (7) réalisés à partir d'une matière réfléchissant le rayonnement solaire ou réfléchissant la chaleur et disposés dans les rainures précitées.

2. Elément en forme de panneau selon la revendication 1, caractérisé en ce que des films métallisés (7) sont présents.

3. Elément en forme de panneau selon l'une quelconque des revendications précédentes, caractérisé en ce que des films transparents (7) sont utilisés.

4. Elément en forme de panneau selon l'une quelconque des revendications précédentes, caractérisé en ce que des films colorés (7) sont utilisés.

5. Elément en forme de panneau selon l'une quelconque des revendications précédentes, caractérisé en ce que des films (7) colorés différemment sont présents dans diverses rainures.

6. Elément en forme de panneau selon l'une quelconque des revendications précédentes, comportant trois ou plus de trois feuilles (2, 3, 4), caractérisé en ce que les feuilles superposées sont recouvertes par des films (7).

7. Elément en forme de panneau selon la revendication 6, caractérisé en ce que les films (7) sont présents, dans des groupes juxtaposés de rainures superposées, de façon alternée sur des feuilles différentes parmi les feuilles superposées.
